# EUROPÄISCHE PATENTSCHRIFT

(11) **EP 0 913 683 B1**
(45) Veröffentlichungstag und Bekanntmachung des Hinweises auf die Patenterteilung: **29.01.2003**
(21) Anmeldenummer: 98120234.4
(22) Anmeldetag: 26.10.1998
(51) Int. Cl.: G01N 21/90

(54) **Vorrichtung zur Prüfung nicht-rotationssymmetrischer Hohlkörper auf Defekte**
Apparatus for detecting defects in hollow articles lacking rotational symmetry
Dispositif de détection de défauts dans des corps creux sans symétrie de révolution

(30) Priorität: 30.10.1997 DE 29719303 U; 01.09.1998 DE 19839746
(43) Veröffentlichungstag der Anmeldung: 06.05.1999
(73) Patentinhaber: Reiner Franke GmbH & Co. Glasbautechnikmaschinen KG, 44182 Erkelenz (DE)
(72) Erfinder: Franke, Reiner, 41069 Mönchengladbach (DE)
(74) Vertreter: Bonsmann, Manfred, Dipl.-Ing.

(56) Entgegenhaltungen:
- EP-A- 0 487 402
- EP-A- 0 701 117
- DE-A- 3 621 976

## Beschreibung

Die Erfindung betrifft eine Vorrichtung zur Prüfung nicht-rotationssymmetrischer Hohlkörper auf Defekte mit einer Zuführeinrichtung zur kontinuierlichen Förderung der Hohlkörper in einen Prüfbereich, einer Einrichtung zur Förderung der Hohlkörper durch den Prüfbereich und einer Einrichtung zum Transport der Hohlkörper aus dem Prüfbereich.

Bei den zu prüfenden Hohlkörpern handelt es sich vorzugsweise um nicht-rotationssymmetrische Glaskörper, wie z.B. Bocksbeutel-Flaschen, Rechteckflaschen, Dreieckflaschen, Medikamentenflaschen oder nicht-rotationssymmetrische Parfum-Flakons. Es besteht der Wunsch, derartige Glaskörper nach der Herstellung in automatisierter Weise auf Oberflächendefekte, wie z.B. Risse oder ungleichmäßige Wandstärken zu untersuchen und für defekt befundene Glaskörper auszusondern. Bei dem Prüfvorgang ist von Bedeutung, daß alle Seiten des Glaskörpers erfaßt werden. Außerdem soll der Prüfvorgang möglichst schnell (typischerweise mit 1 bis 4 Flaschen pro Sekunde) ablaufen. Weiterhin wird eine einfache Anpaßbarkeit an unterschiedliche Glaskörpertypen angestrebt.

Die EP 0 701 117 A2 offenbart eine Vorrichtung zur automatischen Prüfung von Arzneifläschchen im Hinblick auf eine korrekte Befüllung sowie eventuelle Glasschäden. Die rotationssymmetrischen Fläschchen werden dabei von einer Förderschnecke zugeführt und von drei miteinander in Kontakt stehenden Sternrädern mit Ausnehmungen zur Aufnahme der Fläschchen weitertransportiert. Bei diesem Weitertransport werden die Fläschchen an verschiedenen optischen Auswerteeinrichtungen entlanggeführt. Bei einem Teil dieser Auswerteeinrichtungen werden die Fläschchen von einer Spannvorrichtung am Flaschenhals ergriffen, so dass der restliche Flaschenkörper für die optische Untersuchung frei zugänglich ist. Die Spannvorrichtung erlaubt auch die Drehung der Fläschchen um ihre Hochachse.

Der Erfindung liegt die Aufgabe zugrunde, eine zuverlässige und flexible Prüfvorrichtung der eingangs genannten Art zu schaffen, die eine Prüfung aller Seiten des nicht-rotationssymmetrischen Hohlkörpers mit einer Geschwindigkeit von mehreren Hohlkörpern pro Sekunde erlaubt.

Die Lösung dieser Aufgabe erfolgt erfindungsgemäß dadurch, daß eine Detektoreinrichtung zur Aufnahme von die Beschaffenheit des jeweils geprüften Hohlkörpers charakterisierenden Meßwerten abhängig von einem Hohlkörper-Rotationswinkel und eine Auswerteinrichtung zum Vergleich der aufgenommenen Meßwerte mit vorgegebenen Werten zur Entscheidung, ob der jeweils geprüfte Hohlkörper Defekte aufweist, vorgesehen sind, und daß die Einrichtung zur Förderung der Hohlkörper durch den Prüfbereich eine zum Umfassen des Hohlkörpers in einem Bereich mit nicht-rotationssymmetrischer Außenkontur ausgebildete und an diese Außenkontur angepasste Aufnahmeeinrichtung mit einer dahingehend ausgebildeten Antriebseinrichtung aufweist, daß die Aufnahmeeinrichtung über den jeweiligen zu prüfenden, aus der Zuführeinrichtung zugeführten Hohlkörper geschoben wird, der Hohlkörper durch den Prüfbereich an der Detektoreinrichtung vorbei transportiert wird, daß die Aufnahmeeinrichtung im Bereich der Einrichtung zur Förderung der Hohlkörper aus dem Prüfbereich wieder vom Hohlkörper entfernt wird, und daß die Aufnahmeeinrichtung mit dem Hohlkörper während des Transports an der Detektoreinrichtung vorbei um einen vorgegebenen Winkelbetrag rotiert wird.

Bei der Detektoreinrichtung kann es sich beispielsweise um eine optisch arbeitende Einrichtung handeln, bei der der Glaskörper durchleuchtet und der Reflexions- bzw. Transmissionsgrad auf einer Höhe oder mehreren vorgegebenen Höhen des Glaskörpers abhängig vom Rotationswinkel gemessen wird. Defekte Glaskörper können bei einer derartigen Detektoreinrichtung anhand eines Vergleichs des winkelabhängigen Reflexions- bzw. Transmissionsprofils des geprüften Glaskörpers mit gespeicherten Reflexions- bzw. Transmissionsprofilen intakter Glaskörper erkannt werden. Dadurch, daß die Aufnahmeeinrichtung zum Umfassen des Hohlkörpers ausgebildet ist, können die nicht-rotationssymmetrischen Hohlkörper durch Drehen der Aufnahmeeinrichtung um einen definierten Winkelbetrag rotiert werden, wodurch eine vom Rotationswinkel abhängige Meßkurve aufgenommen werden kann. Die Hohlkörper werden von der Zuführeinrichtung in einer definierten Winkellage zugeführt und werden nach der Rotation um einen vorgegebenen Winkel in einer definierten Winkellage weitertransportiert.

Vorzugsweise kann die Aufnahmeeinrichtung leicht auswechselbar ausgebildet sein, so daß die Prüfvorrichtung schnell an unterschiedliche Hohlkörperkonturen angepaßt werden kann.

In vorteilhafter Ausgestaltung der Erfindung kann vorgesehen sein, daß die Einrichtung zur Förderung der Hohlkörper eine Führungsaufnahme mit einem zur Rotationsachse der Aufnahmeeinrichtung zentrierten, nach oben- bzw. unten beweglichen Führungsdorn aufweist, der beim Transport des Hohlkörpers im Prüfbereich von oben in eine Öffnung (vorzugsweise einen Flaschenhals) des zu prüfenden Hohlkörpers einführbar ist. Damit wird während des Transport- und Rotationsvorganges ein Umfallen des Hohlkörpers vermieden.

In einer bevorzugten Ausführungsform der Erfindung kann weiterhin vorgesehen sein, daß die Aufnahmeeinrichtung um ihre Rotationsachse drehbar gelagert an einer von einer Exzentereinrichtung angetriebenen ersten Schlitteneinrichtung angeordnet ist, die eine Hubbewegung und eine quer zu dieser verlaufende Transportbewegung ausführt, und daß die Aufnahmeeinrichtung eine Außenverzahnung aufweist, die mit einem von einem Synchronmotor angetriebenen Zahnrad in Eingriff steht. Durch die erste Schieneneinrichtung wird eine kontinuierliche Bewegung der Aufnahmeeinrichtung auf einer im wesentlichen elliptischen Bahn bewirkt. Die antreibende Exzentereinrichtung ist vorzugsweise mechanisch mit den üblicherweise mittels Transportschnecken arbeitenden Zuführ- und Weitertransporteinrichtungen synchronisiert. Der Synchronmotor führt in der Eingriffsphase der Aufnahmeeinrichtung eine Bewegung um einen vorgegebenen Winkelbetrag aus und bewirkt eine entsprechende Rotation der Aufnahmeeinrichtung. Die der Steuerung bekannte Rotorstellung des Synchronmotors kann mit der Winkelposition des Hohlkörpers in Zuordnung gebracht werden, so daß eine Absolutwerterfassung der aktuellen Winkelposition des Hohlkörpers möglich ist.

In besonders vorteilhafter Weise kann vorgesehen sein, daß der Synchronmotor an einem an der Hubbewegung der Aufnahmeeinrichtung nicht teilnehmenden Element der ersten Schlitteneinrichtung angeordnet ist, und daß die Rotation der Antriebsachse des Synchronmotors auf das Zahnrad über eine Welle mit nicht-rotationssymmetrischem Querschnitt, auf der das Zahnrad mit einer korrespondierenden Ausnehmung gleitet, übertragen wird. Bei der Welle kann es sich beispielsweise um eine Mehrzahnkeilwelle handeln.

Weiterhin kann vorgesehen sein, daß die Aufnahmeeinrichtung in vertikaler Richtung beweglich auf einer auf der ersten Schlitteneinrichtung angeordneten zweiten Schlitteneinrichtung gelagert ist, durch die während des ordnungsgemäßen Prüfungsbetriebs die Hub- und Transportbewegung der Schlitteneinrichtung auf die Aufnahmeeinrichtung übertragen wird, durch die jedoch bei einem Auftreffen der Aufnahmeeinrichtung auf ein Hindernis während der Abwärtsbewegung eine weitere Abwärtsbewegung der Aufnahmeeinrichtung durch eine vertikale Relativbewegung zwischen Aufnahmeeinrichtung und der ersten Schlitteneinrichtung verhindert wird. Dadurch wird eine Beschädigung der Anlage und/oder der Hohlkörper vermieden, falls ein Hohlkörper schräg steht, umfällt, eine über die Kontur der Aufnahmeeinrichtung ragende Kontur aufweist od. dgl. Da die Bewegung der ersten Schlitteneinrichtung aufgrund der hohen Massenträgheit und der großen Geschwindigkeiten in einem solchen Störungsfalle nicht schnell genug gestoppt werden kann, wird durch die Relativbewegung entlang der zweiten Schlitteneinrichtung bei einem "Aufsetzen" der Aufnahmeeinrichtung gewährleistet, daß die auf den Hohlkörper durch das Aufsetzen ausgeübten Kräfte begrenzt werden. In diesem Zusammenhang ist es besonders vorteilhaft, wenn der relativ schwere Synchronmotor nicht direkt an der Aufnahmeeinrichtung angeordnet ist, weil dadurch deren Massenträgheit reduziert wird. Im Falle eines "Aufsetzens" kann weiterhin vorgesehen sein, daß die Anlage auf Störung geschaltet wird. Die zweite Schieneneinrichtung bietet weiterhin den Vorteil, eine einfache Anpassung an verschiedene Flaschentypen zu ermöglichen, wie anhand der Figuren näher erläutert werden wird.

Schließlich kann vorgesehen sein, daß der vorgegebene Winkelbetrag, um den die Aufnahmeeinrichtung mit dem zu prüfenden Hohlkörper rotiert wird, 540° (1½ Umdrehungen) beträgt. Damit wird gewährleistet, daß die Hohlkörper in einer vergleichbaren (bzw. bei der Prüfung von Hohlkörpern mit spiegelsymmetrischer Kontur gleichen) Stellung weitertransportiert werden, in der sie zugeführt wurden. Gleichzeitig wird eine vollständige Erfassung der Transmissions- bzw. Reflexionsprofile über den gesamten Winkelbereich des Hohlkörpers von 360° ermöglicht, ohne daß die Winkelbereiche bei der Auswertung berücksichtigt werden müßten, in denen die Rotationsbewegung beginnt oder beendet wird, was die Auswertung der Profile erleichtert.

Mit der vorliegenden Erfindung wird eine äußerst schnelle und zuverlässige Prüfung nicht-rotationssymmetrischer Hohlkörper ermöglicht.

Ein zusätzlicher Vorteil der erfindungsgemäßen Prüfvorrichtung liegt darin, daß diese mit vertretbarem Aufwand an bereits vorhandenen Prüfmaschinen nachgerüstet werden kann.

Die Erfindung wird nachfolgend unter Bezugnahme auf die Zeichnungen näher erläutert. Es zeigen:
- Fig. 1: eine schematische Seitenansicht der Prüfvorrichtung gemäß einer ersten Ausführungsform der vorliegenden Erfindung,
- Figuren 2 und 2A: eine Draufsicht und eine Seitenansicht einer Aufnahmeanordnung gemäß einer bevorzugten Ausführungsform der Erfindung,
- Figuren 3 bis 5: Ansichten eines Hub- und Transportarmes gemäß der bevorzugten Ausführungsform der Erfindung, und
- Fig. 6: eine Blockdarstellung der elektronischen Steuerung einer Prüfvorrichtung gemäß der vorliegenden Erfindung.

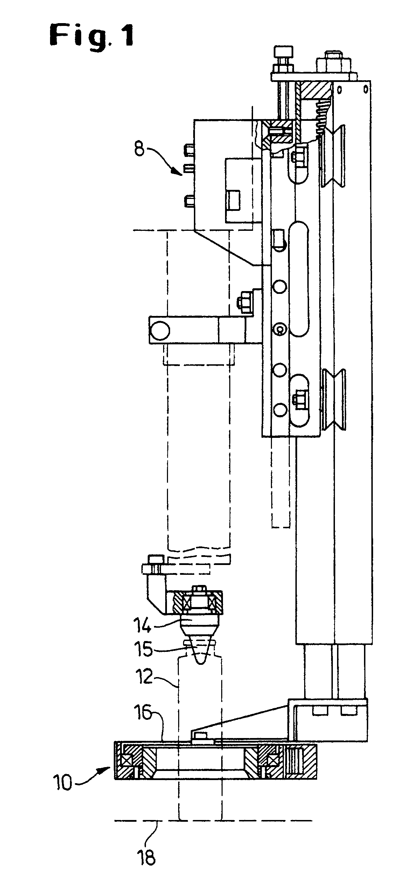

In Fig. 1 ist ein Hub- und Transportarm 8 mit einer insgesamt mit 10 gekennzeichneten Aufnahmeanordnung für eine zu prüfende Glasflasche 12 mit rechteckförmiger Außenkontur dargestellt. Der Hub- und Transportarm 8 wird über ein nicht dargestelltes Exzenter auf einer im wesentlichen elliptischen Bahn bewegt. Der Ablauf ist dabei wie folgt: Die Aufnahmeanordnung 10 wird über die von einer (nicht dargestellten) Transportschnecke zugeführte und auf einem Fließband 18 stehende Glasflasche 12 abgesenkt. Die Aufnahmeanordnung 10 weist eine drehbar gelagerte Aufnahmeeinrichtung 16 auf, die an die Außenkontur der Glasflasche 12 derart angepaßt ist, daß diese die Flasche umfassen kann. Gleichzeitig mit der Aufnahmeanordnung 10 wird eine Führungsaufnahme 14 mit einem nach oben- bzw. unten beweglichen Führungsdorn 15 in den Hals der Glasflasche 12 abgesenkt, wodurch die Flasche zusätzlich stabilisiert werden kann. Über ein nicht im einzelnen dargestelltes Zahnstangengetriebe in der Mechanik des Hub- und Transportarmes 8 wird bewirkt, daß die Aufnahmeeinrichtung 10 im Vergleich zur Führungsaufnahme 14 doppelt so schnell abgesenkt wird. Durch die Führungsaufnahme 14 bzw. die Aufnahmeanordnung 10 findet ein Transport der Glasflasche 12 durch einen Prüfbereich in einer zur Zeichnungsebene senkrechten Richtung statt, wobei gleichzeitig ein entsprechender Vorschub des Fließbandes 18 in diese Richtung erfolgt. Bei Erreichen einer vorgegebenen Meßposition wird die drehbar ausgebildete Aufnahmeeinrichtung 16 um einen vorgegebenen Winkelbetrag - vorzugsweise 1½ Umdrehungen (540°) - um eine quer zur Fließbandfläche 18 verlaufende Achse rotiert. Während dieser Rotation wird das optische Transmissionsprofil durch eine (nicht dargestellte) Meßeinrichtung auf einer oder mehreren Höhen der Glasflasche 12 abhängig von deren Rotationswinkel aufgenommen. Die Rotation erfolgt so schnell, daß der kontinuierliche Weitertransport der Glasflasche 12 die Messung nicht wesentlich beeinflußt. Die Bewegung des Hub- und Transportarms 8 kann während der Durchführung der Messung z.B. durch eine Änderung im Wegebereich der Antriebsmechanik (z.B. Abflachung des Exzenters) zusätzlich verlangsamt werden. Nach Durchführung der Messung wird die Führungsaufnahme 14 bzw. die Aufnahmeanordnung 10 von der Glasflasche 12 nach oben weggezogen. Die Glasflasche 12 wird dann über das Fließband 18 aus dem Prüfbereich abtransportiert, und der Hub- und Transportarm 8 wird in die Ausgangsstellung zurückgebracht, wonach sich der Zyklus wiederholt.

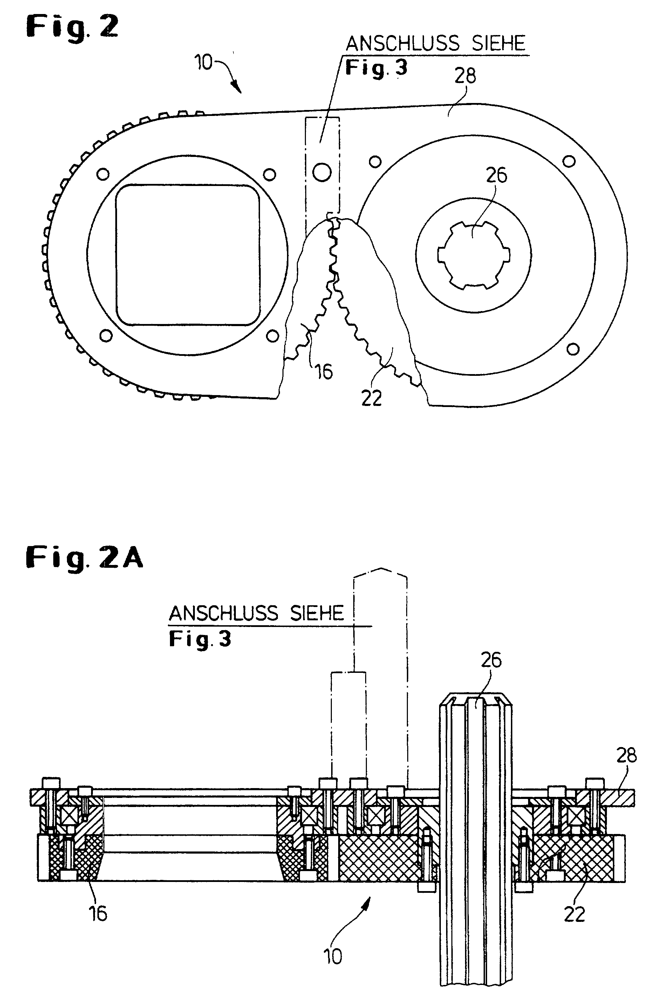

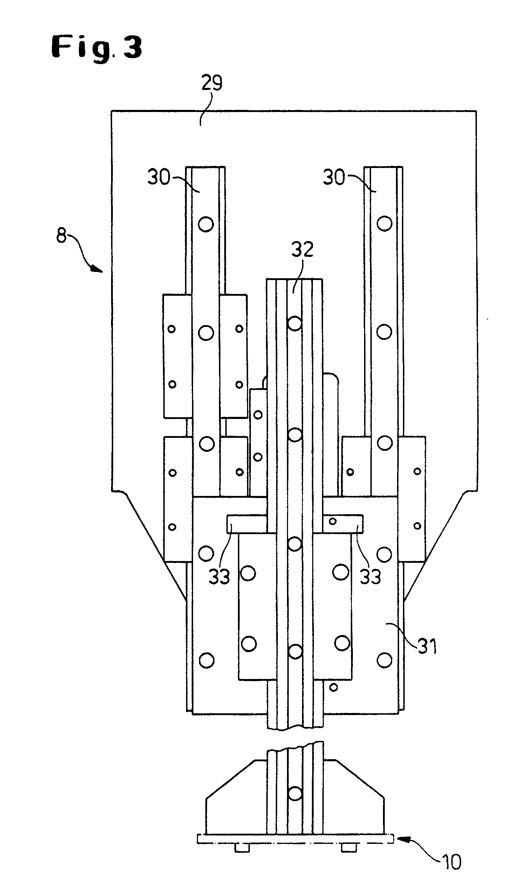

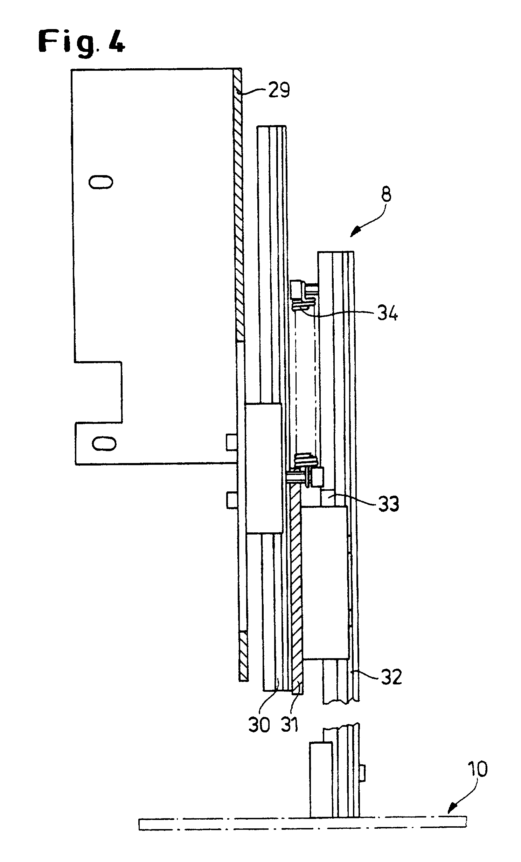

In den Figuren 2 und 2A ist die Aufnahmeanordnung 10 in einer bevorzugten Ausführungsform dargestellt, die von der in Fig. 1 dargestellten Ausführungsform abweicht. Die Aufnahmeanordnung 10 weist einen Träger 28 auf, der starr mit dem unteren Teil des Hub- und Transportarms 8 verbundenen ist. Auf dem Träger ist die eigentliche Aufnahmeeinrichtung 16 drehbar gelagert. Die Aufnahmeeinrichtung 16 weist eine an die jeweilige Flaschenkontur angepaßte (im vorliegenden Falle rechteckige) Ausnehmung auf und ist einfach auswechselbar ausgebildet, so daß eine Umrüstung auf einen anderen Flaschentyp innerhalb kurzer Zeit möglich ist. Die Lagerung der Aufnahmeeinrichtung 16 auf dem Träger 28 erfolgt über Ringlager (vgl. Fig. 2A), vorzugsweise Vierpunkt-Dünnringlager. Die Aufnahmeeinrichtung 16 weist weiterhin eine Außenverzahnung auf, die in ein Zahnrad 22 eingreift. Das Zahnrad 22 ist ebenfalls über Ringlager gelagert und weist eine mittige Ausnehmung für eine Mehrzahnkeilwelle 26 auf, über die die Antriebsbewegung eines (nicht dargestellten) Synchronmotors auf das Zahnrad 22 und somit auf die Aufnahmeeinrichtung 16 übertragen wird. Der Synchronmotor ist unterhalb der Aufnahmeanordnung 10 angeordnet und nimmt an der Hubbewegung der Aufnahmeanordnung nicht teil, steht aber über die Mehrzahnkeilwelle 26 mit der Aufnahmeanordnung in ständiger mechanischer Verbindung. Die Aufnahmeeinrichtung 10 und das Zahnrad 22 sind bevorzugt aus Kunststoff gefertigt. In den Figuren 3 bis 5 sind verschiedene Ansichten der Hubund Transportanordnung 8 dargestellt. Diese wird über eine nicht dargestellte Exzenteranordnung sowohl in horizontaler (Transport-) als auch in vertikaler (Hub-)Richtung bewegt. Die Führung entlang der horizontalen Bewegungsachse erfolgt über eine (nicht dargestellte) Schlittenanordnung, auf der der gesamte Träger 29 entsprechend der Exzenterbewegung horizontal verschoben wird. Auf dem Träger 29 sind Führungsschlitten angeordnet, in denen sich ein Schienenpaar 30 mit einem mit diesem verbundenen Schlitten 31 vertikal bewegt. Der Schlitten 31 ist an die (nicht dargestellte) Exzentereinrichtung angelenkt. Auf dem Schlitten 31 ist ein zweiter Schlitten 32 vertikal beweglich geführt. Von diesem zweiten Schlitten 32 wird die in den Fig. 2 und 2A dargestellte Aufnahmeanordnung 10 getragen. Im ordnungsgemäßen Prüfbetrieb liegt der zweite Schlitten 32 durch Schwerkraftwirkung mit Anschlägen 33 auf den Schlittenführungen des ersten Schlittens 31 auf, so daß sich dieser zusammen mit dem Schlitten 31 bewegt. Setzt die Aufnahmeeinrichtung 16 im Störungsfalle bei der Abwärtsbewegung auf eine Flasche auf, so kann sich der Schlitten 31 gegenüber dem Schlitten 32 bewegen, so daß eine Beschädigung der Anlage und/oder der Prüflinge vermieden wird. Durch die in diesem Falle auftretende Relativbewegung zwischen den Schlitten 31 und 32 wird ein (nicht dargestellter) Abstandssensor aktiviert, durch den die Anlage auf Störung geschaltet wird. Weiterhin kann durch Verschieben der Anschläge 33 die Absenkhöhe der Aufnahmeeinrichtung 16 verstellt werden, so daß die Anlage schnell und einfach an verschiedene Flaschentypen angepaßt werden kann. Eine unerwünschte Relativbewegung zwischen den Schlitten 31 und 32 wird durch eine die Schwerkraftwirkung unterstützende Zugfeder 34 (Fig. 4) ausgeschlossen. Falls Flaschen geprüft werden sollen, die eine relativ geringe Standfestigkeit aufweisen (z.B. Bocksbeutel), kann auch bei der dargestellten Ausführungsform zusätzlich eine Führungsaufnahme 14 mit einem Führungsdorn 15 gemäß der Ausführungsform von Fig. 1 vorgesehen sein.

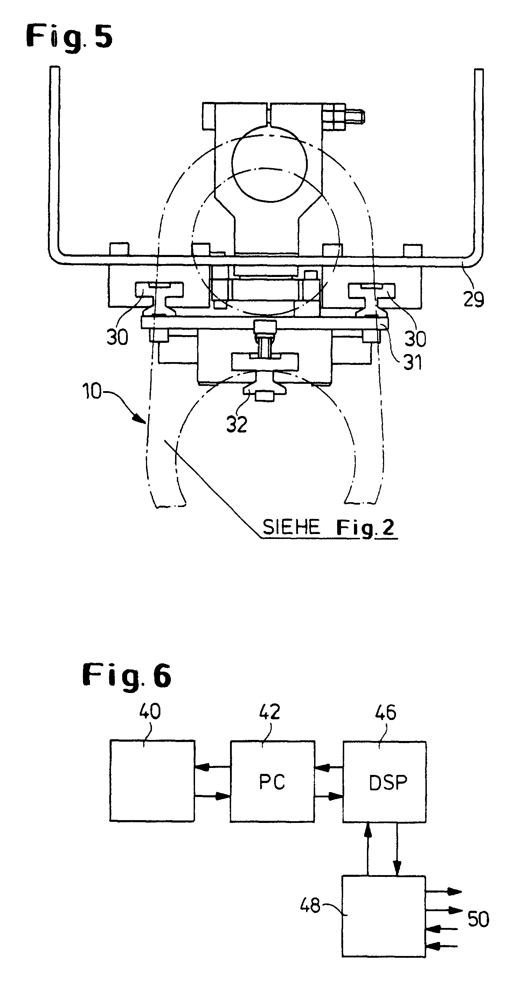

In Fig. 6 ist eine stark schematisierte Blockdarstellung der elektronischen Steuerung einer Prüfvorrichtung gemäß der vorliegenden Erfindung gezeigt. Der Dialog mit einer Bedienperson wird über einen Rechner 42 nach Industriestandard abgewickelt. Der Dialog mit der Bedienperson erfolgt über einen Bildschirm, Tastatur und Maus bzw. Trackball, die gemeinsam mit 40 bezeichnet sind. Die Erfassung der Sensordaten sowie die Auswertung, ob ein defekter Hohlkörper vorliegt, wird dagegen nicht von dem Rechner 42 durchgeführt, sondern über einen Signalprozessor 46, da aufgrund der schnellen Taktraten nur auf diese Weise die erforderlichen Reaktionszeiten erreicht werden. Die Ausgangs- und Eingangssignale des Signalprozessors 46 werden mittels einer Signalkonditionierungseinheit 48 entsprechend den Anforderungen der jeweiligen Sensoren bzw. Aktuatoren konditioniert. Die Eingangs- und Ausgangssignale 50 der Signalkonditionierungseinheit 48 umfassen u.a. die aktuelle Stellung des Antriebsexzenters des Hub- und Transportarmes 8, Signale einer oder mehrerer Reflexions-/Transmissionssensoren, ein Steuersignal für den Synchronmotor sowie ein Signal, durch welches als defekt erkannte Hohlkörper ausgesondert werden.

## Patentansprüche

1. Vorrichtung zur Prüfung nicht-rotationssymmetrischer Hohlkörper auf Defekte, mit einer Zuführeinrichtung zur kontinuierlichen Förderung der Hohlkörper in einen Prüfbereich, einer Einrichtung zur Förderung der Hohlkörper durch den Prüfbereich und einer Einrichtung zum Transport der Hohlkörper aus dem Prüfbereich, wobei eine Detektoreinrichtung zur Aufnahme von die Beschaffenheit des jeweils geprüften Hohlkörpers (12) charakterisierenden Meßwerten abhängig von einem Hohlkörper-Rotationswinkel und eine Auswerteinrichtung zum Vergleich der aufgenommenen Meßwerte mit vorgegebenen Werten zur Entscheidung, ob der jeweils geprüfte Hohlkörper Defekte aufweist, vorgesehen sind, und wobei die Einrichtung zur Förderung der Hohlkörper durch den Prüfbereich eine zum Umfassen des Hohlkörpers in einem Bereich mit nicht-rotationssymmetrischer Außenkontur ausgebildete und an diese Außenkontur angepasste Aufnahmeeinrichtung (16) mit einer dahingehend ausgebildeten Antriebseinrichtung aufweist, wobei die Aufnahmeeinrichtung (16) über den jeweiligen zu prüfenden, aus der Zuführeinrichtung zugeführten Hohlkörper (12) geschoben wird, der Hohlkörper durch den Prüfbereich an der Detektoreinrichtung vorbei transportiert wird, wobei die Aufnahmeeinrichtung (16) im Bereich der Einrichtung zur Förderung der Hohlkörper aus dem Prüfbereich wieder vom Hohlkörper entfernt wird, und wobei die Aufnahmeeinrichtung mit dem Hohlkörper während des Transports an der Detektoreinrichtung vorbei um einen vorgegebenen Winkelbetrag rotiert wird.

2. Vorrichtung nach Anspruch 1, **dadurch gekennzeichnet, daß** die zum Umfassen der Hohlkörper ausgebildete Aufnahmeeinrichtung (16) leicht auswechselbar ausgebildet ist.

3. Vorrichtung nach Anspruch 1 oder 2, **dadurch gekennzeichnet, daß** die Einrichtung zur Förderung der Hohlkörper eine Führungsaufnahme (14) mit einem zur Rotationsachse der Aufnahmeeinrichtung (16) zentrierten, nach oben- bzw. unten beweglichen Führungsdorn (15) aufweist, der beim Transport des Hohlkörpers (12) im Prüfbereich von oben in eine Öffnung des zu prüfenden Hohlkörpers einführbar ist.

4. Vorrichtung nach einem der Ansprüche 1 bis 3, **dadurch gekennzeichnet, daß** die Aufnahmeeinrichtung (16) um ihre Rotationsachse drehbar gelagert an einer von einer Exzentereinrichtung angetriebenen ersten Schlitteneinrichtung angeordnet ist, die eine Hubbewegung und eine quer zu dieser verlaufende Transportbewegung ausführt, und daß die Aufnahmeeinrichtung (16) eine Außenverzahnung aufweist, die mit einem von einem Synchronmotor angetriebenen Zahnrad (22) in Eingriff steht.

5. Vorrichtung nach Anspruch 4, **dadurch gekennzeichnet, daß** der Synchronmotor an einem an der Hubbewegung der Aufnahmeeinrichtung (16) nicht teilnehmenden Element der ersten Schlitteneinrichtung angeordnet ist, und daß die Rotation der Antriebsachse des Synchronmotors auf das Zahnrad (22) über eine Welle (26) mit nicht-rotationssymmetrischem Querschnitt, auf der das Zahnrad (22) mit einer korrespondierenden Ausnehmung gleitet, übertragen wird.

6. Vorrichtung nach Anspruch 5, **dadurch gekennzeichnet, daß** die Aufnahmeeinrichtung (16) in vertikaler Richtung beweglich auf einer auf der ersten Schlitteneinrichtung angeordneten zweiten Schlitteneinrichtung (32) gelagert ist, durch die während des ordnungsgemäßen Prüfungsbetriebs die Hub- und Transportbewegung der Schlitteneinrichtung auf die Aufnahmeeinrichtung (16) übertragen wird, durch die jedoch bei einem Auftreffen der Aufnahmeeinrichtung (16) auf ein Hindernis während der Abwärtsbewegung eine weitere Abwärtsbewegung der Aufnahmeeinrichtung durch eine vertikale Relativbewegung zwischen der Aufnahmeeinrichtung und der ersten Schlitteneinrichtung verhindert wird.

7. Vorrichtung nach einem der Ansprüche 1 bis 6, **dadurch gekennzeichnet, daß** der vorgegebene Winkelbetrag, um den die Aufnahmeeinrichtung (16) mit dem zu prüfenden Hohlkörper rotiert wird, 540° beträgt.

## Claims

1. Apparatus for testing non-rotationally symmetrical hollow bodies for defects, comprising a feed device for continuously conveying the hollow bodies into a test region, a device for conveying the hollow bodies through the test region and a device for transporting the hollow bodies out of the test region, wherein there are provided a detector device for recording measurement values characterising the nature of the respective hollow body (12) being tested in dependence on an angle of rotation of the hollow body and an evaluation device for comparing the recorded measurement values to predetermined values for deciding whether the respective hollow body being tested has defects, wherein the device for conveying the hollow bodies through the test region has a receiving device (16) which is designed to embrace the hollow body in a region with a non-rotationally symmetrical external contour and which is adapted to said external contour with a drive device designed to that effect, wherein the receiving device (16) is pushed over the respective hollow body (12) to be tested, which is fed from the feed device, the hollow body is transported through the test region past the detector device, wherein the receiving device (16) is removed from the hollow body again in the region of the device for conveying the hollow bodies out of the test region, and wherein the receiving device with the hollow body is rotated through a predetermined angular amount during transport past the detector device.

2. Apparatus according to claim 1 **characterised in that** the receiving device (16) designed to embrace the hollow bodies is designed to be easily interchangeable.

3. Apparatus according to claim 1 or claim 2 **characterised in that** the device for conveying the hollow bodies has a guide receiving means (14) with a guide bar (15) which is centred relative to the axis of rotation of the receiving device (16) and which is movable upwardly and downwardly and which upon transport of the hollow body (12) in the test region can be introduced from above into an opening of the hollow body to be tested.

4. Apparatus according to one of claims 1 to 3 **characterised in that** the receiving device (16) is arranged mounted rotatably about its axis of rotation on a first carriage device which is driven by an eccentric device and which performs a stroke movement and a transport movement extending transversely with respect thereto, and that the receiving device (16) has an external tooth arrangement which is in engagement with a gear (22) driven by a synchronous motor.

5. Apparatus according to claim 4 **characterised in that** the synchronous motor is arranged on a component of the first carriage device, which does not participate in the stroke movement of the receiving device (16), and that the rotation of the drive shaft of the synchronous motor is transmitted to the gear (22) by way of a shaft (26) of non-rotationally symmetrical cross-section, on which the gear (22) slides with a corresponding recess.

6. Apparatus according to claim 5 **characterised in that** the receiving device (16) is supported movably in a vertical direction on a second carriage device (32) which is arranged on the first carriage device and by which during the regular testing mode of operation the stroke and transport movements of the carriage device are transmitted to the receiving device (16) but by which upon the receiving device (16) encountering an obstacle during the downward movement further downward movement of the receiving device is prevented by a vertical relative movement between the receiving device and the first carriage device.

7. Apparatus according to one of claims 1 to 6 **characterised in that** the predetermined angular amount by which the receiving device (16) with the hollow body to be tested is rotated is 540°.

## Revendications

1. Dispositif de détection de défauts dans des corps creux sans symétrie de i révolution, comprenant un système d'amenée pour l'acheminement continu des corps creux jusqu'à une zone de vérification, un système de convoyage desdits corps creux à travers ladite zone de vérification, et un système de transport desdits corps creux hors de ladite zone de vérification, sachant qu'on a prévu un système de détection pour recevoir des valeurs mesurées caractérisant la structure du corps creux (12) respectivement examiné, en fonction d'un angle de rotation dudit corps creux, et un système d'interprétation pour comparer les valeurs mesurées reçues à des valeurs préétablies, en vue de décider si le corps creux respectivement examiné accuse des défauts, et sachant que le système, conçu pour convoyer les corps creux à travers la zone de vérification, présente un système de réception (16) qui est réalisé pour ceinturer le corps creux dans une région à profil extérieur dépourvu de symétrie de révolution, est adapté à ce profil extérieur et comporte un mécanisme d'entraînement réalisé en conséquence, ledit système de réception (16) étant enfilé sur le corps creux respectif (12) devant être examiné, délivré à partir du système d'amenée, ledit corps creux étant transporté à travers la zone de vérification, en regard du système de détection, le système de réception (16) étant de nouveau éloigné du corps creux dans la région du système de convoyage des corps creux hors de ladite zone de vérification, et ledit système de réception étant animé d'une rotation d'une valeur angulaire préétablie, avec ledit corps creux, au cours du transport en regard dudit système de détection.

2. Dispositif selon la revendication 1, **caractérisé par le fait que** le système de réception (16), conçu pour ceinturer les corps creux, est de réalisation aisément remplaçable.

3. Dispositif selon la revendication 1 ou 2, **caractérisé par le fait que** le système de convoyage des corps creux présente un logement de guidage (14) pourvu d'un pointeau de guidage (15) qui est centré vis-à-vis de l'axe de rotation du système de réception (16), peut être respectivement déplacé vers le haut ou vers le bas et peut être introduit de haut en bas, lors du transport du corps creux (12) dans la zone de vérification, dans un orifice dudit corps creux à examiner.

4. Dispositif selon l'une des revendications 1 à 3, **caractérisé par le fait que** le système de réception (16), monté pour tourner autour de son axe de rotation, est situé sur un premier système à chariot coulissant qui est entraîné par un mécanisme à excentrique, et qui accomplit un mouvement de levage et un mouvement de transport s'étendant transversalement à ce dernier; et **par le fait que** ledit système de réception (16) est muni d'une denture extérieure en prise avec une roue dentée (22) menée par un moteur synchrone.

5. Dispositif selon la revendication 4, **caractérisé par le fait que** le moteur synchrone est implanté sur un élément du premier système à chariot coulissant ne prenant pas part au mouvement de levage du système de réception (16) ; et **par le fait que** la rotation de l'axe d'entraînement dudit moteur synchrone est répercutée sur la roue dentée (22) par l'intermédiaire d'un arbre (26) à section transversale dépourvue de symétrie de révolution, sur lequel ladite roue dentée (22) glisse par un évidement correspondant.

6. Dispositif selon la revendication 5, **caractérisé par le fait que** le système de réception (16) est monté mobile, dans la direction verticale, sur un second système (32) à chariot coulissant qui est disposé sur le premier système à chariot coulissant et par l'intermédiaire duquel, en mode vérification correct, le mouvement de levage et de transport dudit système à chariot coulissant est répercuté sur ledit système de réception (16), mais par l'intermédiaire duquel toutefois, lorsque ledit système de réception (16) vient rencontrer un obstacle au cours du mouvement descendant, une poursuite dudit mouvement descendant dudit système de réception est empêchée par un mouvement relatif vertical s'opérant entre ledit système de réception et ledit premier système à chariot coulissant.

7. Dispositif selon l'une des revendications 1 à 6, **caractérisé par le fait que** la valeur angulaire préétablie, dont le système de réception (16) est animé d'une rotation avec le corps creux devant être examiné, mesure 540°.
